# EUROPEAN PATENT SPECIFICATION

(11) **EP 3 318 315 B1**
(45) Date of publication and mention of the grant of the patent: **14.10.2020**
(21) Application number: 16197264.1
(22) Date of filing: 04.11.2016
(51) Int. Cl.: B01D 53/18, B01D 53/78, B01D 53/92, F01N 13/00, F01N 3/08

(54) **METHOD AND SYSTEMS FOR ENERGY RECOVERY FOR MARINE EXHAUST GAS CONTROL SYSTEMS**
VERFAHREN UND SYSTEME ZUR ENERGIERÜCKGEWINNUNG FÜR MARINE ABGASKONTROLLSYSTEME
PROCÉDÉ ET SYSTÈMES DE RÉCUPÉRATION D'ÉNERGIE POUR DES SYSTÈMES DE CONTRÔLE DU GAZ D'ÉCHAPPEMENT MARIN

(43) Date of publication of application: 09.05.2018
(73) Proprietor: General Electric Technology GmbH, 5400 Baden (CH)
(72) Inventor: HAAKANSSON, Rikard Bjoern Sture, 35241 Vaxjo (SE)
(74) Representative: BRP Renaud & Partner mbB Rechtsanwälte Patentanwälte Steuerberater

(56) References cited:
- EP-A1- 3 012 010
- DE-B- 1 006 111
- US-A1- 2010 206 171
- US-A1- 2012 260 800
- US-A1- 2013 019 530
- US-A1- 2015 118 131

## Description

### BACKGROUND

The field of the present disclosure relates generally to air quality control systems, and more specifically, to systems and methods that facilitate energy recovery from air quality control systems for marine vessels.

At least some known marine vessels use heavy oil as a fuel for the marine diesel engines. Such marine engines may emit significant amounts of pollution or pollutants that contribute to environmental and public health problems. The emitted pollution may include oxides of sulfur, oxides of nitrogen, hydrocarbons, heavy metals, carbon monoxide, carbon dioxide, particulate matter, and/or various other pollutants, all of which may be harmful to the environment and to humans.

As such, marine vessels must meet increasingly stringent emissions requirements. For example, the emissions requirements have decreased the allowable levels of pollutant emissions from marine engines. Moreover, at least some known marine vessels include a marine air quality control system (AQCS) that uses a seawater scrubber used to facilitate cleaning the engine exhaust. In at least some known AQCS's, seawater is pumped through an absorber located in the top of the marine vessel (i.e., in the stack). The pumping height may be approximately 20 meters (m) to approximately 30 m above the sea surface, and as such, requires large feed pumps that consume increased amounts of energy to operate. As a result, such systems reduce the efficiency of the marine vessel as the marine engine must supply increased energy for the large feed pumps. In addition, the reduced efficiency may increase the fuel consumed by the marine engine, which may lead to increased pollutant emissions.

US 2012/0260800 A1 describes a scrubber unit arrangement for cleaning exhaust gas according to the preamble of claim 1.

EP 3 012 101 A1 and US 2010/0206171 A1 describe different types of scrubber arrangements for cleaning flue gases.

US 2015/0118131 A1, US 2013/0019530 A1 and DE 1 006 111 A disclose various turbine arrangements for energy recovery.

### BRIEF DESCRIPTION

In one aspect, an air quality control system for use in cleaning a process gas according to claim 1 is provided. The air quality control system includes a gas cleaning device positioned to receive a process gas containing pollutants and a clean fluid flow. The gas cleaning device causes the clean fluid flow to contact the process gas to at least partially remove the pollutants from the process gas, thereby generating an at least partially clean exhaust gas flow and an effluent fluid flow. The air quality control system also includes a fluid conduit positioned to receive the effluent fluid flow from the gas cleaning device. The fluid conduit defines a fluid column of effluent fluid flow that has an amount of kinetic energy based on a height of the fluid column. Moreover, the air quality control system includes an energy recovery device positioned to receive the effluent fluid flow from the fluid conduit and convert a portion of the amount of kinetic energy of the effluent fluid flow to mechanical work.

In another aspect, a method for recovering energy from an air quality control system according to claim 5 is provided. The method includes channeling a clean fluid flow to an interior of a gas cleaning device. The method also includes contacting a process gas flowing through the interior of the gas cleaning device with the clean fluid flow to generate an effluent fluid flow. Moreover, the method includes channeling the effluent fluid flow to an energy recovery device via a fluid conduit. The fluid conduit defines a fluid column of the effluent fluid flow that has an amount of kinetic energy based on a height of the fluid column. The method also includes converting, using the energy recovery device, a portion of the amount of kinetic energy of the effluent fluid flow to mechanical work.

### DRAWINGS

These and other features, aspects, and advantages of the present disclosure will become better understood when the following detailed description is read with reference to the accompanying drawings in which like characters represent like parts throughout the drawings, wherein:
FIG. 1 is a plan view of a marine vessel including an exemplary marine open-loop air quality control system (AQCS);
FIG. 2 is a schematic view of the AQCS shown in FIG. 1;
FIG. 3 is an exemplary arrangement of an alternative energy recovery turbine that may be used with the AQCS shown in FIG. 2;
FIG. 4 is an alternative arrangement of the energy recovery turbine and an electric generator shown in FIG. 3 that may be used with the AQCS shown in FIG. 2; and
FIG. 5 is another alternative arrangement of the energy recovery turbine and the electric generator shown in FIG. 3 that may be used with the AQCS shown in FIG. 2.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings. The singular forms "a," "an," and "the" include plural references unless the context clearly dictates otherwise. "Optional" or "optionally" means that the subsequently described event or circumstance may or may not occur, and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, embodiments "including" or "having" an element or a plurality of elements having a particular property may include additional such elements not having that property.

Approximating language, as used herein throughout the specification and claims, may be applied to modify any quantitative representation that could permissibly vary without resulting in a change in the basic function to which it is related. Accordingly, a value modified by a term or terms such as "about," "approximately," and "substantially" are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

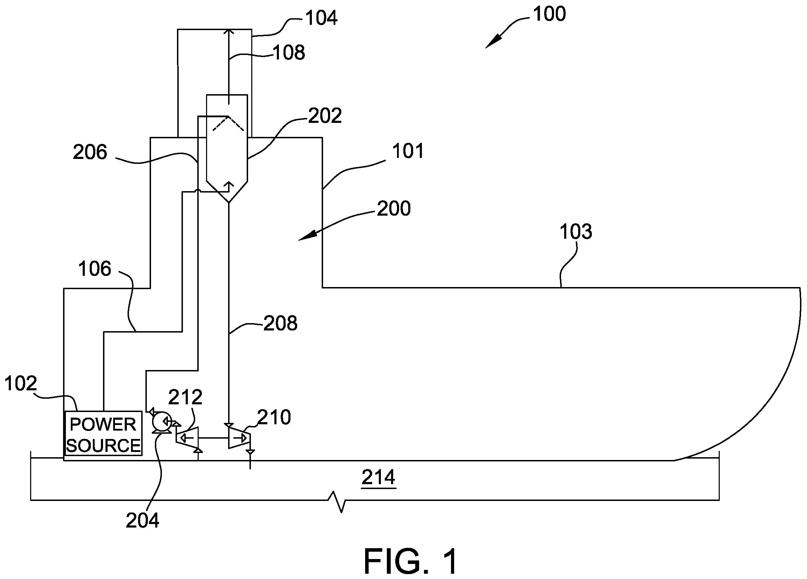

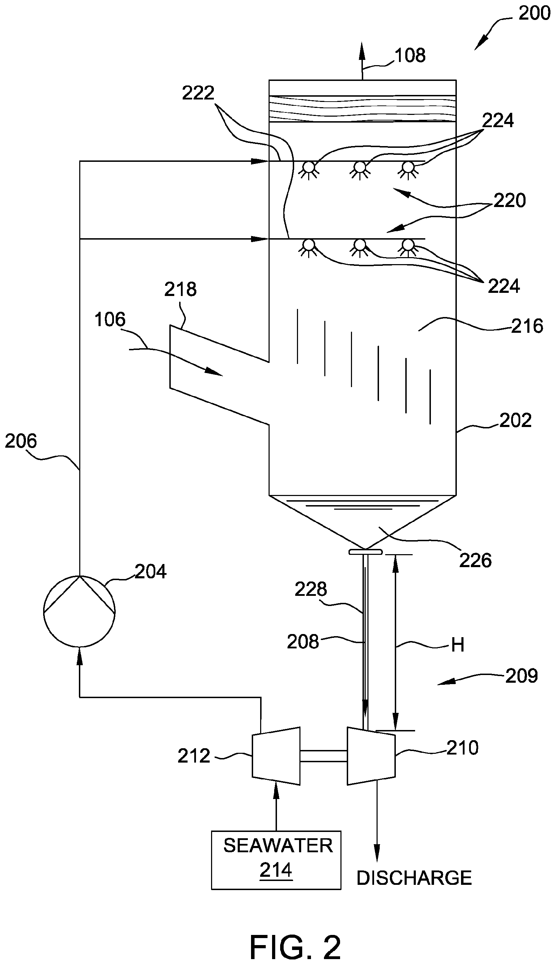

FIG. 1 is a plan view of an exemplary marine vessel 100 including an exemplary marine open-loop air quality control system (AQCS) 200. FIG. 2 is a schematic view of AQCS 200. In the exemplary embodiment, marine vessel 100 includes a power source 102, preferably located in a lower portion of marine vessel 100, such as at a lower deck or bilge (not shown) of marine vessel 100. Power source 102 is, for example, and without limitation, a marine diesel engine, gas turbine engine, steam turbine engine and boiler system, and/or any type of marine engine that enables marine vessel 100 to function as described herein. Marine vessel 100 includes an exhaust stack 104, which is part of a superstructure 101 of marine vessel 100, for receiving a process gas from power source 102, such as an exhaust gas flow 106. In the exemplary embodiment, exhaust gas flow 106 contains various pollutants. Exhaust gas flow 106 enters a gas cleaning device, or scrubber section 202 of AQCS 200, wherein exhaust gas flow 106 is at least partially cleaned, i.e., exhaust gas flow 106 has at least a portion of pollutants removed from exhaust gas flow 106 by scrubber section 202. Exhaust gas flow 106 exits vessel 100 via exhaust stack 104 as at least a partially clean exhaust gas flow 108. While scrubber section 202 of AQCS 200 is shown located in stack 104, in alternative embodiments, scrubber section 202 may be located in other portions of superstructure 101 or otherwise above a main deck 103 of marine vessel 100.

In the exemplary embodiment, AQCS 200 includes at least one feed pump 204 for pumping a clean fluid flow 206, for example, and without limitation, seawater 214, to scrubber section 202 to facilitate cleaning exhaust gas flow 106. In the exemplary embodiment, scrubber 202 is located at least partially in exhaust stack 104. Alternatively, scrubber 202 may be located entirely in exhaust stack 104 or may be located external to exhaust stack 104. In the exemplary embodiment, clean fluid flow 206 flows downwardly through scrubber section 202 and absorbs at least a portion of the pollutants in exhaust gas flow 106 to produce partially clean exhaust gas flow 108 and an effluent fluid flow 208. Effluent fluid flow 208 is collected and channeled downwardly to an energy recovery device 210. In the exemplary embodiment, a fluid column 209 of effluent fluid flow 208 has a predetermined fluid column height "H" defined above energy recovery device 210. Thus, effluent fluid flow 208 has an amount of potential energy due to height "H" of fluid column 209, and when flowing, effluent fluid flow 208 has an amount of kinetic energy that is recoverable by energy recovery device 210. In the exemplary embodiment, energy recovery device 210 is a turbine, referred to herein as an energy recovery turbine, that is rotatably coupled to a pre-pump turbine 212 that channels, or propels clean fluid 206, such as seawater 214 to feed pump 204. Energy recovery turbine 210 and pre-pump turbine 212 facilitate reducing the power required to pump clean fluid flow 206 to scrubber section 202, and as such, facilitates an increase in the efficiency of marine vessel 100, and in particular power source 102.

In the exemplary embodiments, as described herein, energy recovery turbine 210 is a water turbine or hydro-turbine that converts kinetic energy of a fluid, such as seawater 214, into mechanical work. In the exemplary embodiment, energy recovery turbine 210 is a reaction turbine. A reaction turbine, as the term is used herein, is a turbine acted on by a fluid that changes pressure as it flows through the turbine and transfers its energy to the turbine. In alternative embodiments, energy recovery turbine 210 may be any type of hydro-turbine that enables AQCS 200 to function as described herein, such as, for example, and without limitation, an impulse turbine, such as a Pelton wheel turbine or a cross-flow turbine.

In the exemplary embodiment, energy recovery turbine 210 and scrubber section 202 are located a predetermined distance apart that defines height "H" of fluid column 209. For example, and without limitation, in one embodiment, scrubber section 202 is located above energy recovery turbine 210 such that height "H" is in the range of between about 15 meters (m) (49 feet (ft.)) to about 40 m (131 ft.). Thus, effluent fluid flow 208 has a hydrostatic pressure, or head pressure, in the range of between about 147 kilopascals (kPa) (23.1 pounds per square inch (psi)) to about 392 kPA (57 psi). Alternatively, energy recovery turbine 210 and scrubber section 202 may be located at any height "H" apart that enables AQCS 200 to function as described herein.

In the exemplary embodiment, exhaust gas flow 106 contains, for example, sulphur oxides, nitrogen oxides, hydrocarbons, heavy metals, carbon oxides, particulate matter, and various other pollutants. In operation, with reference to FIG. 2, exhaust gas flow 106 flows to scrubber section 202 and enters interior 216 of scrubber section 202 via an inlet 218. Exhaust gas flow 106 flows upwards through scrubber section 202. In the exemplary embodiment, scrubber section 202 is a spray tower, such that interior 216 of scrubber section 202 includes a plurality of fluid spray assemblies 220 arranged vertically above one another. In alternative embodiments, scrubber section 202 includes, for example, and without limitation, a packed bed scrubber, a FLOWPAC® turbulent bed absorber, and/or any other wet flue gas scrubber that enables scrubber section 202 to function as described herein. In the exemplary embodiment, only two fluid spray assemblies 220 are shown. Alternatively, scrubber section 202 may include any number of fluid spray assemblies 220 that enables AQCS 200 to function as described herein.

In some embodiments, the number of fluid spray assemblies 220 in operation at any point in time can be less than the number of fluid spray assemblies 220 installed in scrubber section 202. Each fluid spray assembly 220 includes a fluid supply line 222 and a plurality of nozzles 224 coupled in fluid communication to a respective fluid supply line 222. Clean fluid flow 206, such as seawater 214, supplied via fluid supply lines 222 to nozzles 224 is atomized and contacts interior 216 of scrubber section 202 and exhaust gas flow 106 to facilitate absorption of the pollutants, for example, and without limitation, the sulphur oxides and nitrogen oxides.

Feed pump 204 pumps clean fluid flow 206 to fluid supply lines 222. However, to facilitate reducing the power used by feed pump 204 to pump clean fluid flow 206 to fluid supply lines 222, energy recovery turbine 210 rotates pre-pump turbine 212. Pre-pump turbine 212 channels seawater 214 a predetermined distance upwardly to feed pump 204 to facilitate reducing the power requirement for feed pump 204. For example, and without limitation, feed pump 204 can be moved vertically closer to fluid supply lines 222 when receiving seawater 214 from pre-pump turbine 212. Alternatively, pre-pump turbine 212 increases the pressure of seawater 214 a predetermined amount, thereby facilitating reducing the head or pressure of feed pump 204. In the exemplary embodiment, the atomized clean fluid flow 206 flows downwardly through interior 216 of scrubber section 202 of AQCS 200 and absorbs pollutants from exhaust gas flow 106 flowing upwardly.

Effluent fluid flow 208 is collected in a lower portion 226 of scrubber section 202 of AQCS 200. At least a portion of effluent fluid flow 208 is channeled to energy recovery turbine 210 via a fluid conduit 228 to operate pre-pump turbine 212, and is then discharged to, for example, the environment. For example, and without limitation, effluent fluid flow 208 is directed towards blades (not shown) of energy recovery turbine 210, thus generating a force on the blades and causing energy recovery turbine 210 to rotate and generate mechanical work. Thus, effluent fluid flow 208, due to its hydrostatic pressure, or head, transfers energy from effluent fluid flow 208 to energy recovery turbine 210.

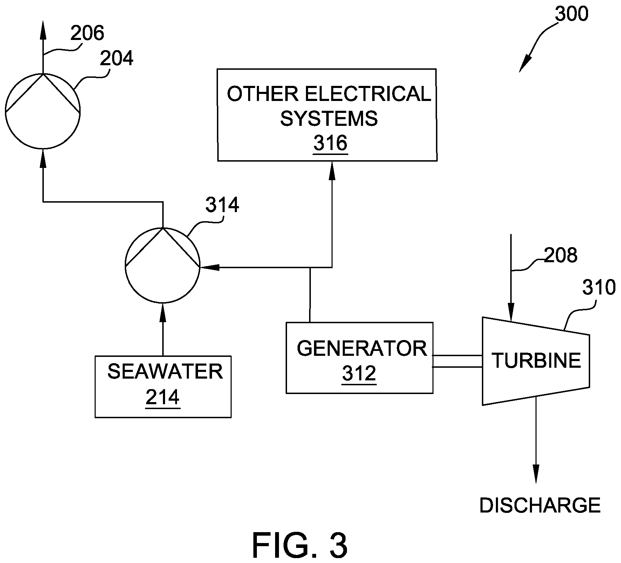

FIG. 3 is an exemplary arrangement 300 of an alternative energy recovery turbine 310 that may be used with AQCS 200 (shown in FIG. 2). In the exemplary embodiment, energy recovery turbine 310 is coupled to an electric generator 312 for converting the energy transferred from effluent fluid flow 208 to electrical power. In some embodiments, electric generator 312 is an integral component of energy recovery turbine 310. In the exemplary embodiment, electric generator 312 is coupled to an electric pump 314 and/or other electrical systems 316 of marine vessel 100. In the exemplary embodiment, electric pump 314 channels, or propels clean fluid 206, such as seawater 214 to feed pump 204. Energy recovery turbine 310 and electric pump 314 facilitate reducing the power required to pump clean fluid flow 206 to scrubber section 202, thereby facilitating an increase in the efficiency of marine vessel 100, and in particular power source 102. As described herein with respect to energy recovery turbine 210, energy recovery turbine 310 similarly is a hydro-turbine that converts kinetic energy of a fluid, such as seawater 214, into mechanical work. In the exemplary embodiment, energy recovery turbine 310 is a reaction turbine. In alternative embodiments, energy recovery turbine 310 is any type of hydro-turbine that enables AQCS 200 to function as described herein, for example, and without limitation, an impulse turbine, such as a Pelton wheel turbine or a cross-flow turbine.

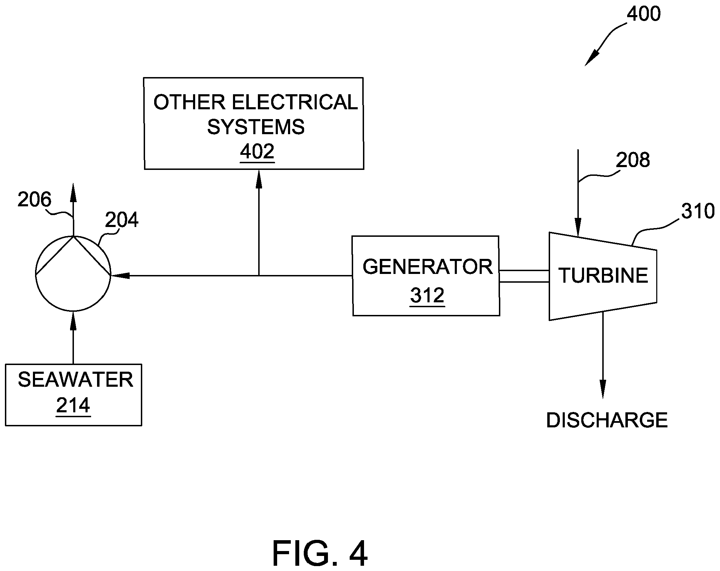

FIG. 4 is an alternative exemplary arrangement 400 of energy recovery turbine 310 and electric generator 312 that may be used with AQCS 200 (shown in FIG. 2). In the exemplary embodiment, energy recovery turbine 310 is coupled to electric generator 312 for converting the energy transferred from effluent fluid flow 208 to electrical power. Electric generator 312 is coupled to feed pump 204 and/or to other electrical systems 402 of marine vessel 100. Energy recovery turbine 310 and electric generator 312 facilitate reducing an amount of power required from power source 102 to pump clean fluid flow 206 to scrubber section 202, thereby facilitating an increase in the efficiency of marine vessel 100, and in particular power source 102.

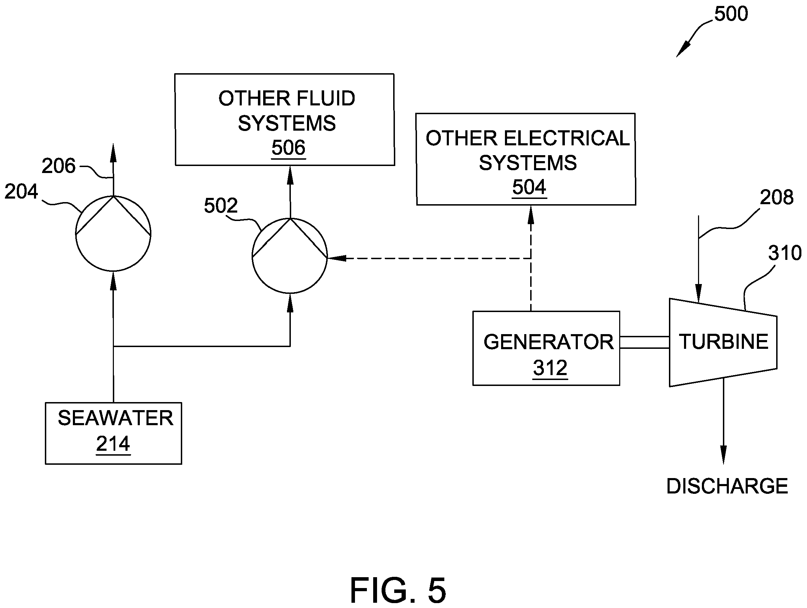

FIG. 5 is an alternative exemplary arrangement 500 of energy recovery turbine 310 and electric generator 312 that may be used with AQCS 200 (shown in FIG. 1). In the exemplary embodiment, energy recovery turbine 310 is coupled to electric generator 312 for converting the energy transferred from effluent fluid flow 208 to electrical power. Electric generator 312 is coupled to one or more of a fluid pump 502 and other electrical systems 504 of marine vessel 100. In some embodiments, fluid pump 502 is coupled in flow communication to one or more other fluid systems 506 of marine vessel 100, for example, and without limitation, a cooling system (not shown) of power source 102 (shown in FIG. 1), a fire fighting system (not shown), and a desalination system (not shown). Energy recovery turbine 310 and electric generator 312 facilitate reducing an amount of power required from power source 102 to pump seawater 214 to other fluid systems 506 of marine vessel 100 and power other electrical systems 504 of marine vessel 100, thereby facilitating an increase in the efficiency of marine vessel 100, and in particular power source 102.

The systems and methods described herein facilitate recovering energy from an effluent fluid flow discharged by a scrubber used for cleaning an exhaust gas flow. Specifically, in the exemplary embodiments, an energy recovery device receives an effluent fluid flow having a predetermined water column height or pressure head to convert the kinetic energy of the fluid to mechanical work. The energy recovery device can rotate a pump to facilitate pumping a fluid, or rotate an electric generator to generate electrical power. As such, in contrast to known marine vessels, the systems and methods described herein facilitate recovering energy that is typically lost, and as such, increases the efficiency of the marine vessel. In addition, the systems and methods described herein facilitate reducing the fuel consumed by the marine vessel engine, which may lead to decreased pollutant emissions.

An exemplary technical effect of the methods and systems described herein includes at least one of: (a) channeling a fluid column to an energy recovery device; (b) converting potential and kinetic energy of the fluid column to mechanical work; (c) rotating a pump for pumping a fluid to a feed pump of a marine air quality control system (AQCS); and (d) generating electrical power to power electrical systems of the vessel.

The methods and systems described herein are not limited to the specific embodiments described herein. For example, the method and systems may also be used in combination with other energy recovery systems, and are not limited to practice only with the marine air quality control systems as described herein. Rather, the exemplary embodiment can be implemented and utilized in connection with many other energy recovery systems.

Although specific features of various embodiments of the disclosure may be shown in some drawings and not in others, this is for convenience only.

This written description uses examples to disclose the systems and methods described herein, including the best mode, and also to enable any person skilled in the art to practice the disclosure.

The patentable scope of the disclosure is defined by the claims, and may include other examples that occur to those skilled in the art.

## Claims

1. An air quality control system (200) for use in cleaning a process gas (106), said system comprising:
a gas cleaning device (202) positioned to receive a process gas (106) containing pollutants and a clean fluid flow (206), said gas cleaning device (202) causes the clean fluid flow (206) to contact the process gas (106) to at least partially remove the pollutants from the process gas (106), thereby generating an at least partially clean exhaust gas flow (108) and an effluent fluid flow (208);
a fluid conduit (228) positioned to receive the effluent fluid flow (208) discharged from said gas cleaning device (202), said fluid conduit (228) defining a fluid column (209) of effluent fluid flow (208) having an amount of kinetic energy based on a height (H) of the fluid column (209);
an energy recovery device (210) positioned to:
receive the effluent fluid flow (208) from said fluid conduit (228); and
convert a portion of the amount of kinetic energy of the effluent fluid flow (208) to mechanical work,
a pre-pump turbine (212) rotatably coupled to said energy recovery device (210) and rotatable by the mechanical work,
**characterized in that**
the system further comprises a feed pump (204) configured to channel the clean fluid flow (206) to said gas cleaning device (202),
wherein said pre-pump turbine (212) is coupled in flow communication to said feed pump (204) and configured to channel fluid to said feed pump (204) to generate the clean fluid flow (206).

2. An air quality control system (200) in accordance with claim 1 further comprising an electric generator (312) configured to convert the mechanical work into electrical power.

3. An air quality control system (200) in accordance with any preceding claim, wherein said air quality control system (200) is disposed in a marine vessel (100), said gas cleaning device (202) is positioned above a main deck (103) of said marine vessel (100), and said energy recovery device (210) is positioned below said main deck (103).

4. An air quality control system (200) in accordance with any preceding claim, wherein said energy recovery device (210) is an impulse turbine.

5. A method for recovering energy using an air quality control system (200) according to claim 1, said method comprising:
channeling a clean fluid flow (206) to an interior of a gas cleaning device (202);
contacting a process gas (106) flowing through the interior (216) of the gas cleaning device (202) with the clean fluid flow (206) to generate an effluent fluid flow (208);
channeling the effluent fluid flow (208) to an energy recovery device (210) via a fluid conduit (228), the fluid conduit (228) defining a fluid column (209) of the effluent fluid flow (208) having an amount of kinetic energy based on a height (H) of the fluid column (209); and
converting, using the energy recovery device (210), a portion of the amount of kinetic energy of the effluent fluid flow (208) to mechanical work.

6. A method in accordance with Claim 5 further comprising converting a portion of the mechanical work to electrical power using an electric generator (312).

7. A method in accordance with any one of Claims 5 or 6, wherein channeling the effluent fluid flow (208) to the energy recovery device (210) comprises channeling the effluent fluid flow (208) to a hydro-turbine configured to convert the portion of the amount of kinetic energy kinetic energy of the effluent fluid flow (208) into mechanical work.

8. A method in accordance with any one of Claims 5 to 7 wherein
the gas cleaning device (202) is positioned above a main deck (103) of a marine vessel (100); and wherein
the energy recovery device (210) is positioned below the main deck (103), wherein the air quality control system (200) is disposed in the marine vessel (100).

## Patentansprüche

1. Luftqualitätskontrollsystem (200) für die Verwendung zur Reinigung eines Prozessgases (106), das System umfassend:
eine Gasreinigungsvorrichtung (202), die dazu angeordnet ist, ein Prozessgas (106), das Schadstoffe enthält, und einen sauberen Fluidstrom (206) aufzunehmen, wobei die Gasreinigungsvorrichtung (202) bewirkt, dass der saubere Fluidstrom (206) in Kontakt mit dem Prozessgas (106) gelangt, um die Schadstoffe mindestens teilweise aus dem Prozessgas (106) zu entfernen, wodurch ein mindestens teilweise sauberer Abgasstrom (108) und ein Abwasserfluidstrom (208) erzeugt werden;
eine Fluidleitung (228), die dazu angeordnet ist, den aus der Gasreinigungsvorrichtung (202) abgegebenen Abwasserfluidstrom (208) aufzunehmen, wobei die Fluidleitung (228) eine Fluidsäule (209) von Abwasserfluidstrom (208) mit einer Menge von kinetischer Energie basierend auf einer Höhe (H) der Fluidsäule (209) definiert;
eine Energierückgewinnungsvorrichtung (210), die dazu angeordnet ist:
den Abwasserfluidstrom (208) aus der Fluidleitung (228) aufzunehmen; und
einen Anteil der Menge der kinetischen Energie des Abwasserfluidstroms (208) in mechanische Arbeit umzuwandeln,
eine Vorpumpenturbine (212), die drehbar mit der Energierückgewinnungsvorrichtung (210) gekoppelt und durch die mechanische Arbeit drehbar ist,
**dadurch gekennzeichnet, dass**
das System ferner eine Förderpumpe (204) umfasst, die dazu eingerichtet ist, den sauberen Fluidstrom (206) zu der Gasreinigungsvorrichtung (202) zu leiten, wobei die Vorpumpenturbine (212) in Strömungsverbindung mit der Förderpumpe (204) gekoppelt und dazu eingerichtet ist, Fluid zu der Förderpumpe (204) zu leiten, um den sauberen Fluidstrom (206) zu erzeugen.

2. Luftqualitätskontrollsystem (200) nach Anspruch 1, ferner umfassend einen elektrischen Generator (312), der dazu eingerichtet ist, die mechanische Arbeit in elektrische Leistung umzuwandeln.

3. Luftqualitätskontrollsystem (200) nach einem der vorstehenden Ansprüche, wobei das Luftqualitätskontrollsystem (200) in einem Schiff (100) angeordnet ist, die Gasreinigungsvorrichtung (202) oberhalb eines Hauptdecks (103) des Schiffs (100) angeordnet ist und die Energierückgewinnungsvorrichtung (210) unterhalb des Hauptdecks (103) angeordnet ist.

4. Luftqualitätskontrollsystem (200) nach einem der vorstehenden Ansprüche, wobei die Energierückgewinnungsvorrichtung (210) eine Impulsturbine ist.

5. Verfahren zum Rückgewinnen von Energie unter Verwendung eines Luftqualitätskontrollsystems (200) nach Anspruch 1, das Verfahren umfassend:
Leiten eines sauberen Fluidstroms (206) zu einem Innenraum einer Gasreinigungsvorrichtung (202);
Inkontaktbringen eines Prozessgases (106), das durch den Innenraum (216) der Gasreinigungsvorrichtung (202) strömt, mit dem sauberen Fluidstrom (206), um einen Abwasserfluidstrom (208) zu erzeugen;
Leiten des Abwasserfluidstroms (208) zu einer Energierückgewinnungsvorrichtung (210) über eine Fluidleitung (228), wobei die Fluidleitung (228) eine Fluidsäule (209) des Abwasserfluidstroms (208) mit einer Menge von kinetischer Energie basierend auf einer Höhe (H) der Fluidsäule (209) definiert; und
Umwandeln, unter Verwendung der Energierückgewinnungsvorrichtung (210), eines Anteils der Menge der kinetischen Energie des Abwasserfluidstroms (208) in mechanische Arbeit.

6. Verfahren nach Anspruch 5, ferner umfassend das Umwandeln eines Anteils der mechanischen Arbeit in elektrische Leistung unter Verwendung eines elektrischen Generators (312).

7. Verfahren nach einem der Ansprüche 5 oder 6, wobei das Leiten des Abwasserfluidstroms (208) zu der Energierückgewinnungsvorrichtung (210) das Leiten des Abwasserfluidstroms (208) zu einer Wasserturbine umfasst, die dazu eingerichtet ist, den Anteil der Menge der kinetischen Energie kinetischen Energie des Abwasserfluidstroms (208) in mechanische Arbeit umzuwandeln.

8. Verfahren nach einem der Ansprüche 5 bis 7, wobei
die Gasreinigungsvorrichtung (202) oberhalb eines Hauptdecks (103) eines Schiffes (100) angeordnet ist; und wobei
die Energierückgewinnungsvorrichtung (210) unterhalb des Hauptdecks (103) angeordnet ist, wobei das Luftqualitätskontrollsystem (200) in dem Schiff (100) angeordnet ist.

## Revendications

1. Système de contrôle de la qualité de l'air (200) destiné à être utilisé pour le nettoyage d'un gaz de procédé (106), ledit système comprenant :
un dispositif de nettoyage de gaz (202) positionné pour recevoir un gaz de procédé (106) contenant des polluants et un écoulement de fluide propre (206), ledit dispositif de nettoyage de gaz (202) amène l'écoulement de fluide propre (206) à entrer en contact avec le gaz de procédé (106) afin de retirer au moins partiellement les polluants du gaz de procédé (106), générant de ce fait un écoulement de gaz d'échappement au moins partiellement propre (108) et un écoulement de fluide d'effluent (208) ;
un conduit de fluide (228) positionné pour recevoir l'écoulement de fluide d'effluent (208) déchargé dudit dispositif de nettoyage de gaz (202), ledit conduit de fluide (228) définissant une colonne de fluide (209) d'écoulement de fluide d'effluent (208) ayant une quantité d'énergie cinétique en fonction d'une hauteur (H) de la colonne de fluide (209) ;
un dispositif de récupération d'énergie (210) positionné pour :
recevoir l'écoulement de fluide d'effluent (208) dudit conduit de fluide (228) ; et
convertir une partie de la quantité d'énergie cinétique de l'écoulement de fluide d'effluent (208) en travail mécanique,
une turbine de pré-pompe (212) couplée de manière rotative audit dispositif de récupération d'énergie (210) et pouvant tourner grâce au travail mécanique,
**caractérisé en ce que**
le système comprend en outre une pompe d'alimentation (204) configurée pour canaliser l'écoulement de fluide propre (206) vers ledit dispositif de nettoyage de gaz (202), dans lequel ladite turbine de pré-pompe (212) est couplée en communication fluidique à ladite pompe d'alimentation (204) et configurée pour canaliser le fluide vers ladite pompe d'alimentation (204) pour générer l'écoulement de fluide propre (206).

2. Système de contrôle de la qualité de l'air (200) selon la revendication 1 comprenant en outre un générateur électrique (312) configuré pour convertir le travail mécanique en une alimentation électrique.

3. Système de contrôle de la qualité de l'air (200) selon l'une quelconque des revendications précédentes, dans lequel ledit système de contrôle de la qualité de l'air (200) est disposé dans un navire de marine (100), ledit dispositif de nettoyage de gaz (202) est positionné au-dessus d'un pont principal (103) dudit navire de marine (100), et ledit dispositif de récupération d'énergie (210) est positionné en dessous dudit pont principal (103).

4. Système de contrôle de la qualité de l'air (200) selon l'une quelconque des revendications précédentes, dans lequel ledit dispositif de récupération d'énergie (210) est une turbine à impulsion.

5. Procédé de récupération d'énergie utilisant un système de contrôle de la qualité de l'air (200) selon la revendication 1, ledit procédé comprenant :
la canalisation d'un écoulement de fluide propre (206) vers un intérieur d'un dispositif de nettoyage de gaz (202) ;
la mise en contact d'un gaz de procédé (106) s'écoulant à travers l'intérieur (216) du dispositif de nettoyage de gaz (202) avec l'écoulement de fluide propre (206) pour générer un écoulement de fluide d'effluent (208) ;
la canalisation de l'écoulement de fluide d'effluent (208) vers un dispositif de récupération d'énergie (210) par le biais d'un conduit de fluide (228), le conduit de fluide (228) définissant une colonne de fluide (209) de l'écoulement de fluide d'effluent (208) ayant une quantité d'énergie cinétique en fonction d'une hauteur (H) de la colonne de fluide (209) ; et
la conversion, en utilisant le dispositif de récupération d'énergie (210), d'une partie de la quantité d'énergie cinétique de l'écoulement de fluide d'effluent (208) en travail mécanique.

6. Procédé selon la revendication 5, comprenant en outre la conversion d'une partie du travail mécanique en alimentation électrique en utilisant un générateur électrique (312).

7. Procédé selon l'une quelconque des revendications 5 ou 6, dans lequel la canalisation de l'écoulement de fluide d'effluent (208) vers le dispositif de récupération d'énergie (210) comprend la canalisation de l'écoulement de fluide d'effluent (208) vers une hydroturbine configurée pour convertir la partie de la quantité d'énergie cinétique énergie cinétique de l'écoulement de fluide d'effluent (208) en travail mécanique.

8. Procédé selon l'une quelconque des revendications 5 à 7 dans lequel
le dispositif de nettoyage de gaz (202) est positionné au-dessus d'un pont principal (103) d'un navire de marine (100) ; et dans lequel
le dispositif de récupération d'énergie (210) est positionné en dessous du pont principal (103), dans lequel le système de contrôle de la qualité de l'air (200) est disposé dans le navire de marine (100).
